# EUROPEAN PATENT SPECIFICATION

(11) **EP 2 898 365 B1**
(45) Date of publication and mention of the grant of the patent: **12.07.2017**
(21) Application number: 13766652.5
(22) Date of filing: 23.09.2013
(51) Int. Cl.: G02B 27/00, B60S 1/08, B60S 1/44, B60S 1/56, B60S 1/26

(54) **WIPER FOR CLEANING AN EXPOSED SURFACE OF AN OPTICAL ELEMENT**
WISCHBLATT ZUM REINIGEN EINER FREILIEGENDEN OBERFLÄCHE EINES OPTISCHEN ELEMENTS
RACLEUR POUR NETTOYAGE DE SURFACE EXPOSÉE D'ÉLÉMENT OPTIQUE

(30) Priority: 24.09.2012 GB 201217007
(43) Date of publication of application: 29.07.2015
(73) Proprietor: Electro Mechanical Systems Limited, Poole, Dorset BH12 4PE (GB)
(72) Inventor: SEEDALL, Martin Russell, Swanage Dorset BH19 2EF (GB); WILLIAMSON, Ian, Weymouth Dorset DT4 8JD (GB)
(74) Representative: Boult Wade Tennant
(86) International application number: PCT/GB2013/052483
(87) International publication number: WO 2014/045063

(56) References cited:
- DE-A1- 2 113 411
- GB-A- 2 098 467
- GB-A- 2 248 014

## Description

The present invention relates to apparatus and methods for cleaning or wiping a surface, such as an exposed transparent surface of an optical element. For example, the optical element may be a wide angle lens having a convex exposed front surface, and the invention may be applied in automotive, security, industrial and other areas where automatic or motorised cleaning is desirable.

### Introduction

Various situations arise in which the exposed surface of an optical element such as a lens for a camera or a lamp may require cleaning in an automated manner. Examples include the cleaning of camera lenses in security, automotive, medical, industrial process and other areas of application. It is of course desirable for mechanisms arranged to carry out such automated cleaning to be robust and reliable over a long period. When the optical element is substantially flat a conventional wiper blade similar to those used on vehicle windscreens may be used, although due to the radial movement, cleaning of substantially the whole of the optical element will be difficult or impossible for most shapes of optical element. Furthermore, it may be difficult to design a robust and reliable wiper of this type for smaller optical elements, and for optical elements having an exposed surface with a significant degree of curvature which tends to interfere with radial motion of a wiper arm.

The invention seeks to address these and other limitations of the related prior art.

GB 2098467 discloses a wiper mechanism for cleaning a substantially circular surface, comprising an annular housing surrounding the surface on which is mounted an annular carrier bearing a wiper arm assembly.

### Summary of Invention

The invention provides an apparatus for cleaning an exposed surface of an optical element as set out in claim 1, and a method as set out in claim 19.

Embodiments of the invention provide methods and apparatus for cleaning an exposed surface of an optical element in which a wiper arm disposed generally radially (or in some embodiments, more specifically, generally diametrically) on the exposed surface is circumferentially rotated. This can be achieved by moving an end of the wiper arm circumferentially around the outside of the portion of the optical element to be cleaned while retaining the wiper arm in a generally radial or diametrical deployed or active configuration. Preferably, the wiper arm is moveable to a stowed position, which does not obscure the cleaned portion of the optical element, after cleaning has taken place.

The exposed surface may, in particular, be a convex curved surface such as a spherically or other rotationally symmetric curved surface with an apex in a central region of the portion of the optical element to be cleaned, or a correspondingly concave surface. Typically, the exposed surface may be curved so as to be rotationally symmetric about a central point or region such as the apex mentioned above.

The exposed surface may have a circular perimeter. The exposed surface may be transparent or translucent, although the invention may also be used if desired to clean opaque surfaces.

More particularly, the optical element may be a camera lens, such as a wide angle lens. The wide angle lens, or other optical element may be used, for example, on a vehicle such as a road vehicle. However, the optical element may be some other type of lens, or a window of some sort, for example a window used to protect a lens or some other apparatus.

In particular, embodiments provide an apparatus comprising: a collar arranged to be disposed circumferentially around, and to rotate around an optical axis of the optical element which the apparatus is arranged to clean; and a wiper arm coupled to the collar so as to rotationally wipe the exposed surface of the optical element as the collar rotates. The collar may be disposed around the optical element, or the optical element may be displaced axially from the collar such that the collar rotates around an optical axis of the optical element.

The wiper arm may be arranged to move, relative to the collar, between a stowed position in which cleaning does not take place, and a deployed or active position in which the exposed surface of the optical element may be cleaned by the wiper arm. Typically, when in the stowed position the wiper arm will not obscure the optical element, or at least will not obscure a portion of the optical element which is cleaned by the wiper arm.

The wiper arm may be rotationally coupled to the collar for rotational movement between the stowed and active positions across the exposed surface. The wiper arm may also be coupled to the collar so as to move axially relative to the optical element between the stowed and active positions, for example to ensure that the wiper arm is in an optimal position to clean the exposed surface. In particular, rotation of the collar around the optical axis may be used to drive the wiper arm between the stowed and active positions, although other mechanisms could be used. Alternatively or additionally, an axial drive may be used to move the optical element axially, as discussed further below, to bring the optical element into an optimal or suitable position for cleaning by the wiper arm.

The apparatus may further comprise a cam track, wherein the wiper arm is coupled to or provided with a cam follower arranged to follow the cam track as the collar rotates so as to move the wiper arm between the stowed and active positions, and to guide the wiper arm through the rotational cleaning of the exposed surface. To this end, the cam track may comprise a first portion which drives the wiper arm between the stowed and active positions, and a second portion which retains the wiper arm in the active position for wiping the exposed surface as the collar rotates.

The cam track may form a continuous loop. Such a loop may be arranged such that on rotation in a single direction of the collar the wiper arm moves from the stowed position to the active position, wipes the exposed surface, and returns from the active position to the stowed position. Other arrangements, for example in which the collar rotates in both directions, are also possible.

The collar may be disposed adjacent to and arranged to rotate relative to a chassis which is coaxial with the collar. The cam track may then be comprised in the chassis, for example as a groove in a surface of the chassis facing the collar.

The apparatus may further comprise an annular cover disposed in front of the collar. The annular cover may be sprung so as to bias the cam follower towards the cam track. For example, one end of the annular cover may be fixed relative to the collar, and the other end of the annular cover may be urged away from the collar by the axial movement of the wiper arm from the stowed to the active position. The annular cover could be made, for example, from a single piece of a springy material such as stainless steel.

In other embodiments the wiper arm may be rotationally mounted between the chassis and the collar. A distal portion of the wiper arm, for example a tip of the wiper arm may then be retained between the chassis and the collar, or within a groove of the collar, to assist in urging or retaining the wiper arm against the exposed optical surface during the wiping process. The tip may be retained in this way when the wiper arm is in the active position. Optionally, the tip may also be retained between the chassis and the collar, or within a groove of the collar, when the wiper arm is in the stowed position, and optionally also when moving between the stowed and active positions.

The apparatus may further comprise a motor arranged to rotate the collar around the optical element, thereby driving motion of the wiper arm between the stowed and active positions and driving the rotational cleaning movement of the wiper arm.

The wiper arm may comprise a wiper blade arranged to contact the exposed surface, wherein the wiper blade is formed from a flexible material such as an elastomer. Whether a separate material is used for a wiper blade or not, the wiper arm is preferably shaped to contact and clean the exposed surface as the wiper arm rotates during the cleaning action.

The apparatus comprises an axial drive, for example driven by a motor such as an electrical motor, arranged to retract the optical element and the exposed optical surface, from the position in which the optical surface is positioned for use. This backwards movement retraction, and corresponding forwards movement extension along the optical axis can be used for various purposes, for example to retract the optical element to a position suitable for cleaning by the wiper arm, for protection for example from environmental agents such as dirt, water or ice, for security, to provide an axial movement during wiping to improve the cleaning process, and/or for other purposes.

For example, if the exposed surface is located for use in front of the collar for use of the optical element (in a deployed position) then the axial drive may be arranged to retract the optical element and the exposed surface towards the collar for the rotational cleaning of the exposed surface of the optical element as the collar rotates, and to axially extend the optical element forwards again to the deployed position after cleaning.

More generally, embodiments may provide apparatus for moving and optionally for cleaning an exposed optical surface of an optical element, comprising: an axial drive arranged to retract the exposed surface towards the apparatus to a retracted position (which may be a cleaning position) and to extend the exposed surface away from the apparatus to a deployed position; and a wiper arm arranged to rotationally clean the exposed surface when in the retracted position, and such apparatus may comprise other apparatus aspects as set out above. In order to effect the axial drive, the apparatus may further comprise an axial drive motor arranged to drive the exposed optical surface between the deployed and retracted positions.

In other embodiments, the axial drive may be effected using a cam arranged to co-rotate with the wiper arm, the cam being provided with a recess arranged to urge axial retraction of the optical element before cleaning, and to allow forwards axial extension of the optical element after cleaning. The cam may, for example, be provided by a backward facing rim of a collar such as the collar already discussed above for driving the wiper arm. The rim may thereby act as a circular cam to control axial movement of the camera, which may for example be urged forward against the cam by a spring.

Embodiments also provide methods corresponding to the above apparatus, for example a method of cleaning an exposed convex surface of an optical element comprising: disposing a wiper arm generally or approximately or substantially radially (which includes the option of disposing the arm generally or approximately or substantially diametrically) on the exposed surface; and rotating at least one circumferential end of the wiper arm around the outside of the exposed surface, for example all the way around the outside of the exposed surface.

Of course, the wiper arm need not be disposed along an exact radius or diameter of the exposed surface, but should extend generally from a periphery into a central region of the exposed surface to provide adequate cleaning of the exposed surface when rotated, and the terms radially and diametrically should be understood in this manner. Typically, the rotation of the wiper arm around the exposed optical surface may include a full rotation all the way around the outside surface, or at least substantially so, and subsequent rotations may be in the same direction if required. However, other rotational options may be used.

The method may further comprise, for example, rotating the wiper arm to a circumferential stowed position after cleaning the exposed convex surface, in which the wiper arm does not obscure the optical element.

### Brief description of the drawings

Embodiments of the invention will now be described, by way of example only, with reference to the accompanying drawings of which:
Figure 1 shows in perspective view apparatus for cleaning an exposed surface of an optical element. The optical element is not shown in this figure, but may be disposed within the cylindrical aperture through which an optical axis is shown to pass;
Figure 2 shows the apparatus of figure 1, in which the wiper arm is in an active position, and additionally showing the optical element to be cleaned, with solid arrows showing the rotational direction of the wiper arm and adjacent annular cover;
Figure 3 is a perspective view of the apparatus without the optical element, in which the wiper arm is moving between a stowed and an active position;
Figure 4 shows the wiper arm, the chassis, and interaction between the cam follower of the wiper arm and the cam track of the chassis;
Figure 5 is a cut-away perspective view of the wiper arm, collar, chassis and motor with the wiper arm part way between the stowed and active positions;
Figure 6 shows the wiper arm, collar and motor with the wiper arm in the active position;
Figure 7 is a cross section through the apparatus and an optical element deployed as part of a camera;
Figure 8 shows how the optical element may be deployed in a position such that the exposed surface is in front of the collar, and how the optical element may be retracted using an axial drive for cleaning of the exposed surface, after which the optical element may be returned using the axial drive to the deployed position;
Figure 9 shows a particular embodiment of the axial drive using a backward facing rim of the collar as a cylindrical cam to urge a camera assembly against a spring and allow forward extension of the camera assembly into the collar as the wiper arm moves into the stowed position;
Figure 10 shows some components of figure 9 with the camera assembly, provided with a triangular cam follower to engage the rim of the collar, in place;
Figure 11 is a perspective cut away view of an alternative arrangement of the chassis, collar and wiper arm;
Figure 12 shows the cam track, wiper arm and motorized driving mechanisms for the arrangement of figure 11;
Figure 13 shows the arrangement of figures 11 and 12 with the collar in place;
Figure 14 shows details of an axial drive which may be used with the arrangement of figures 1 to 8 or 11 to 13;
Figure 15 shows the arrangement of figures 11 to 14 with a camera assembly installed and the exposed optical surface in an extended position for use; and
Figure 16 shows the arrangement of figure 15 with the camera assembly and exposed optical surface retracted and in the process of being cleaned by the wiper arm.

### Detailed description of embodiments

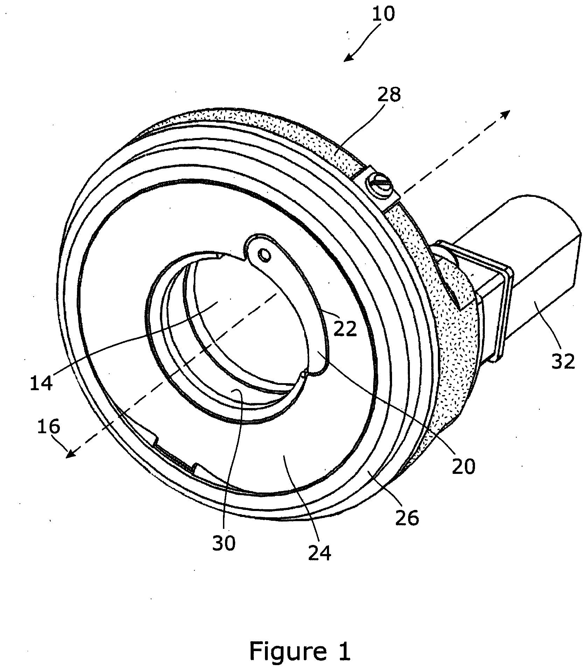

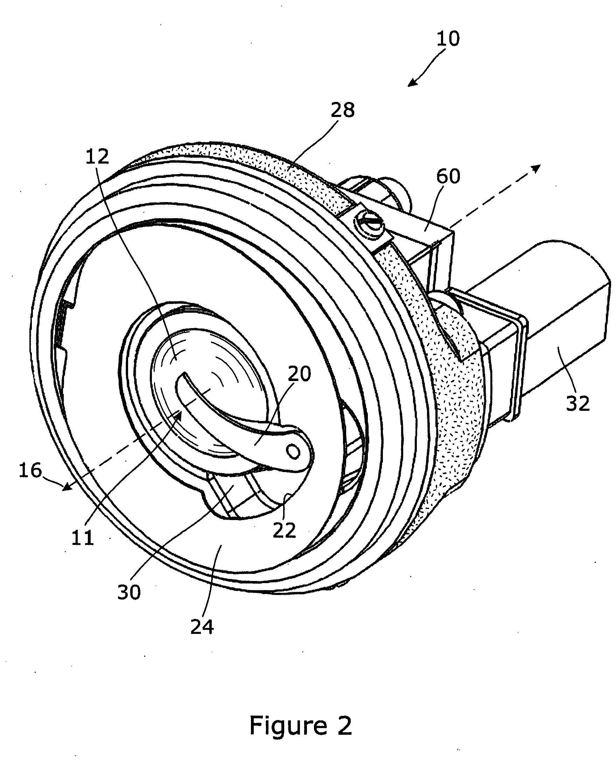

Referring to figure 1, there is shown apparatus 10 for cleaning an exposed surface of an optical element, or some other suitable exposed surface. The apparatus includes an aperture 14, which in figure 1 is essentially cylindrical, for accepting the optical element and/or components on which the optical element is mounted. For clarity, the optical element is not shown in this figure, but is shown in figure 2, and may be for example a wide angle camera lens, an optical element with a convex exposed surface, or similar. The optical element typically has an optical axis 16 which also passes through a central part of the aperture 14.

The apparatus comprises a wiper arm 20 which in figure 1 is shown in a stowed position, in which it does not obscure the exposed surface of the optical element. The wiper arm 20 is coupled to a collar 30 which defines at least some of the aperture 14. The wiper arm in the stowed position sits in a correspondingly shaped cut out 22 of an annular cover 24 which is concentric with the aperture 14, such that a front face of the wiper arm 20 is flush with the front face of the annular cover. The annular cover 24 is mounted within a bezel 26 which surrounds the annular cover and the collar, and when the wiper arm 20 is in the stowed position the annular cover 24 is flush with the bezel 26 where the two meet.

The wiper arm may be formed of a single material. However, if required, a wiper blade of a more flexible or resilient material such as an elastomer may be provided as part of the wiper arm, for making contact with and cleaning the exposed surface.

A rear part of the bezel 26 is fixed to a chassis 28. A motor 32 is also mounted to the chassis 28, and is used to drive rotational movement of the collar 30 relative to the chassis 28 about the optical axis 16, which in turn drives movement of the wiper arm 20 between the stowed position shown in figure 1 and an active position shown in figure 2, and to rotationally wipe the exposed surface of the optical element as the collar rotates.

Figure 2 shows the apparatus of figure 1 when the wiper arm is in the active position, in the process of wiping the exposed surface 11 of the optical element 12, which is shown in this figure. Figure 2 also illustrates a camera assembly 60 of which the optical element 12 and the exposed surface 11 form a frontal part. In the active position, the wiper arm 22 assumes an essentially radial configuration with respect to the exposed surface 11, instead of the circumferential configuration adopted in the stowed position. The wiper arm in the active position is driven to rotate around the optical element 12 so as to wipe the surface of the optical element 12 before returning to the stowed position.

The wiper arm may move to the active position, rotate fully in one direction about the optical element 12, and return to the stowed position, such that rotation of the wiper arm about the optical element 12 is always in the same direction. Alternatively, rotation in both directions may be used if desired, for example to obtain a different or improved cleaning effect.

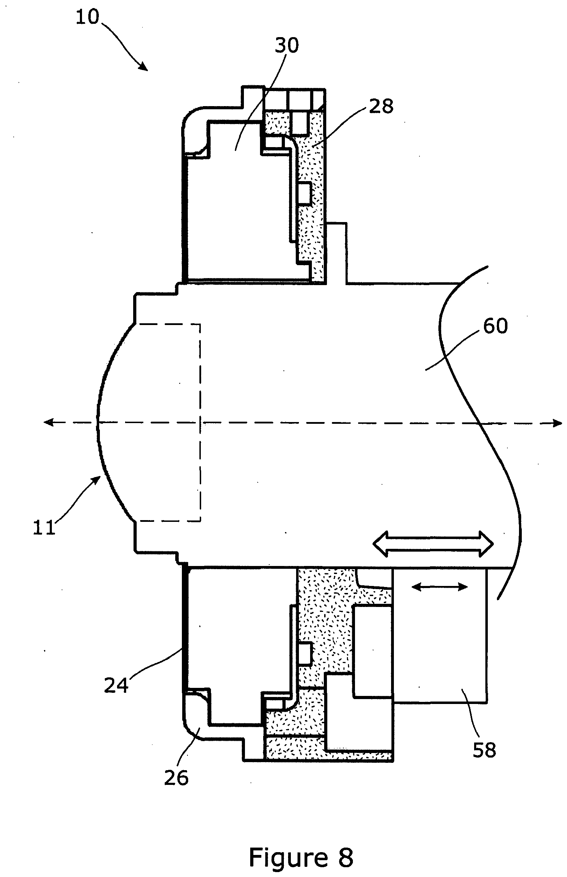

It can be seen from figure 2 that the wiper arm is displaced axially in a forward direction between the stowed and active positions. The amount of axial displacement required may vary depending on the position and geometry of the exposed surface 11 to be cleaned. For example, a more convex surface or an exposed surface which needs to be deployed significantly in front of the collar for example for optical reasons may require more forward axial movement between the stowed and active positions. In some cases, it may be that no axial movement is necessary, or it may alternatively or additionally be necessary to provide axial movement of the exposed surface and optical element relative to the apparatus, as described in more detail in connection with figure 8.

It can also be seen from figure 2 that axial movement of the wiper arm from the stowed position to the active position lifts an end of the annular cover 24 proximal to the wiper arm 20 away from the collar 30 and bezel 26, while an end of the annular cover 24 distal from the wiper arm is fixed relative to the collar 30. As will be seen more clearly in subsequent figures, the annular cover acts in this way as a spring to urge the wiper arm, or components to which the wiper arm is connected, towards the collar 30. To this end, the annular cover may be provided, for example, by a single piece of a springy material such as stainless steel, with a rearward facing tab at the end of the cover distal from the wiper arm. This tab, set approximately at right angles to the front of the annular cover, then couples the annular cover to the collar 30 so that the two co-rotate while allowing lifting of the cover at the end proximal to the wiper arm. Alternative ways of biasing the wiper arm towards the collar may be used, and if no axial movement of the wiper arm between the stowed and deployed positions is needed then the annular cover may be a fixed and/or rigid component..

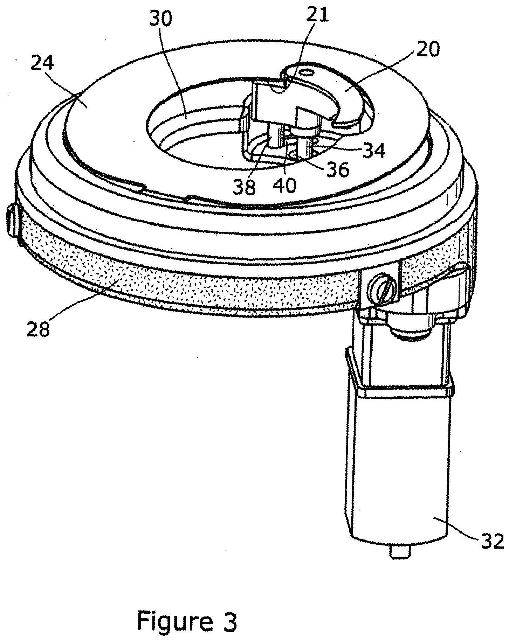

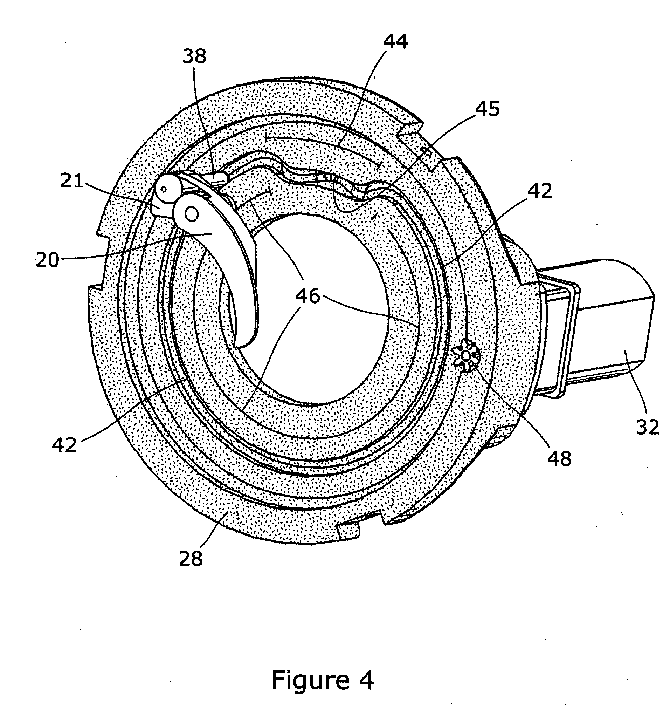

The lifting of the annular cover 24 of figure 2 when the wiper arm 20 moves from the stowed to the active position is also shown in figure 3, in which the optical element is omitted for clarity purposes. In particular, it can be seen that the wiper arm 20 comprises a shoulder 21 which remains under the annular cover 24 in both positions, and on which the annular cover acts as a spring to urge the shoulder 21 backwards towards the collar 30. It can also be seen from figure 3 that the wiper arm 20 is rotationally mounted on the collar 30 using a pin 34 located in a corresponding aperture 36 of the collar 30, which allows both rotation of the wiper arm 20 relative to the collar, and axial displacement between the stowed and active positions. The wiper arm 20 is also provided with a cam follower 38 which in this example is another pin extending from the wiper arm, through an arcuate slot 40 in the collar 30. The cam follower 38 is driven by a cam track, discussed below in connection with figure 4.

Figure 4 shows in perspective view the chassis 28 and the wiper arm 20, with the collar 30 and other components omitted for clarity, so as to show how the cam follower 38 coupled or fixed to the wiper arm 20 is engaged with and arranged to follow the cam track 42. In the present example the cam track 42 is provided by the chassis 28, as a groove in the chassis, into which an end of the cam follower 38 is urged by action of the annular cover acting as a spring. Of course, other configurations of the apparatus in which the cam track is provided in front of or behind the collar 30, and is provided as a raised, recessed or other form of track, with the cam follower obliged to follow the cam track using different mechanisms are possible.

A first portion 44 of the cam track is shaped such that, as the collar 30 rotates relative to the chassis 28, the wiper arm moves between the stowed and active positions, for example by providing suitable variations in depth and lateral offset of the cam track. The remaining second portion 46 of the cam track is shaped such that, as the collar 30 rotates relative to the chassis 28, the wiper arm remains in the active position and rotates about the exposed surface so as to rotationally wipe the exposed surface. In figure 4 the second portion follows a curve of constant radius set such that the wiper arm 20 remains in the active, essentially radial position, with a constant depth such that the wiper arm 20 remains axially extended in the active position. Because the second portion of the cam track cannot occupy a full rotation of the collar relative to the chassis, the first and second portions of the cam track should, between them, be arranged to provide rotational cleaning action to substantially the whole of the exposed surface 11. When the wiper arm 20 is fully in the stowed position the cam follower occupies a rest position 45 of the cam track, which in this example is the deepest point of the cam track, in which the wiper arm is not axially extended.

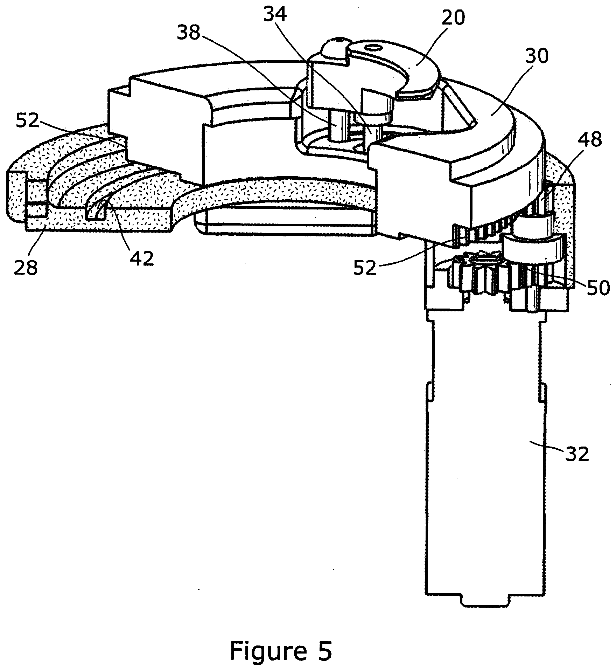

Also shown in figure 4 is a pinion 48 mounted for axial rotation in an inward facing surface of the chassis 28 and driven directly or indirectly by the motor 32. This pinion 48 is used to drive rotation of the collar as illustrated in figure 5.

Figure 5 shows, in a cut-away perspective view, the motor 32, collar 30, chassis 28 and wiper arm 20, but omitting the bezel 26. The cam track 42 is visible where the collar 30 has been cut away. The wiper arm is illustrated in a position part way between the stowed and active positions, in which the wiper arm has been axially displaced in a forward direction, but has not yet adopted the radial configuration used for rotational cleaning of the exposed surface.

From this figure it can be seen that the pinion 48 driven by the motor 32 (in this case indirectly through a drive chain 50) drives rotation of the collar 30 through engagement with a toothed rack 52 provided around a circumference of the collar 30. In this way, operation of the motor and corresponding continuous rotation of the pinion 48 in one direction can drive corresponding rotation of the collar 30 relative to the chassis 28 such that the wiper arm moves from the stowed to the active position, rotationally wipes the exposed surface 11, and returns to the stowed position, when operation of the motor ceases pending the next cleaning cycle.

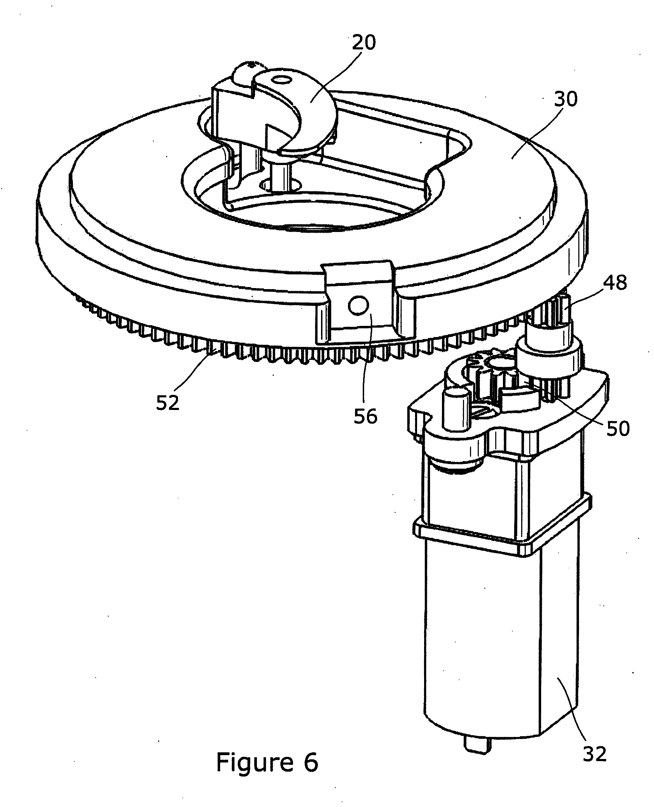

The toothed rack 52 can more clearly be seen in figure 6 in which the motor 32, drive chain 50, pinion 48 and collar 30 are shown in perspective view, along with the wiper arm 20 in the active position. Also shown in figure 6 is some further detail of the collar. In particular, the external rim of the collar 30 comprises a tab recess 56 arranged to accept the rearward facing tab of the annular cover described above in connection with figure 2. The rearward facing tab of the annular cover may be secured in the tab recess 56 by means of a screw or bolt. The tab recess is arranged so that it does not interfere with the full circumferential form of the toothed rack 52.

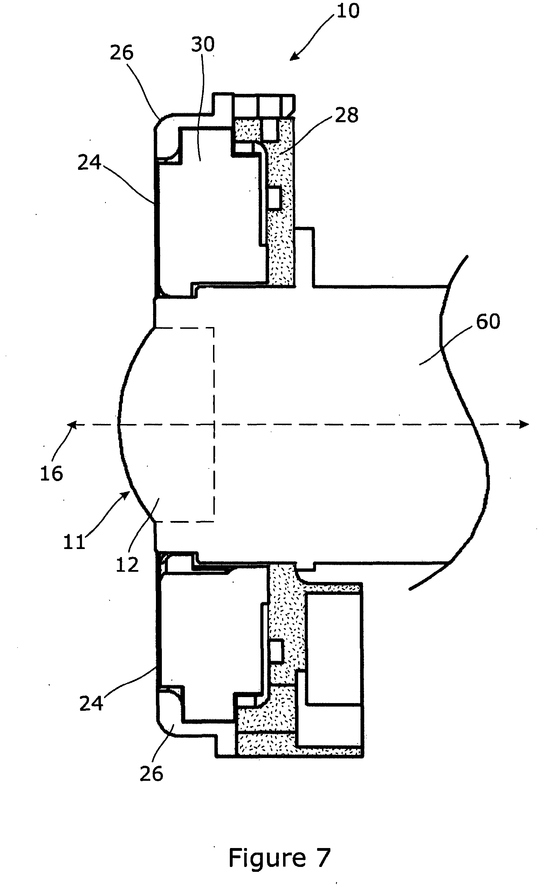

Figure 7 is a sectional view across the apparatus 10, in which none of the wiper arm 20, motor 32, drive chain 50, pinion 48 or annular cover tab are seen. This figure also shows in cross section a camera assembly 60 mounted in the apparatus 10, the camera assembly 60 incorporating the optical element 12 with exposed surface 11. Whether the optical element 12 is part of a camera assembly, or is used for some other purpose, the apparatus 10 is particularly advantageous when the exposed surface 11 is a convex surface, for example a spherical or other rotationally symmetrical and/or convex surface of a wide angle lens. In this figure the optical element is shown as being of similar depth in the axial direction to the collar, and resides largely within the collar, but the optical element could be deeper or shallower in the axial direction, and could for example be relatively thin and reside forwards of the collar in an axial direction.

Details the wiper arm 20 and its movement between the stowed and active positions may be dependent, for example, on the degree of curvature of the exposed surface and its position relative to the apparatus. For example, an exposed surface 11 with a higher degree of curvature and deeper profile in the axial direction may require a larger axial movement of the wiper arm between the stowed and active positions.

In some situations it may be desirable for the optical element 12 to be situated sufficiently far forward in the apparatus, or to have such a high degree of convex curvature, that it is impractical for axial movement of the wiper arm alone to bring the wiper arm into a suitable deployed position for cleaning the exposed surface 11. Such a situation may arise, for example, if a very wide angle lens is being used, for example having a field of view of more than 160 degrees, or even more than 180 degrees. In such situations, the apparatus 10 may be equipped with an axial drive 58 arranged to move the relative axial positions of the optical element 12 and the apparatus 10 or some particular part of the apparatus 10 such as the chassis 28.

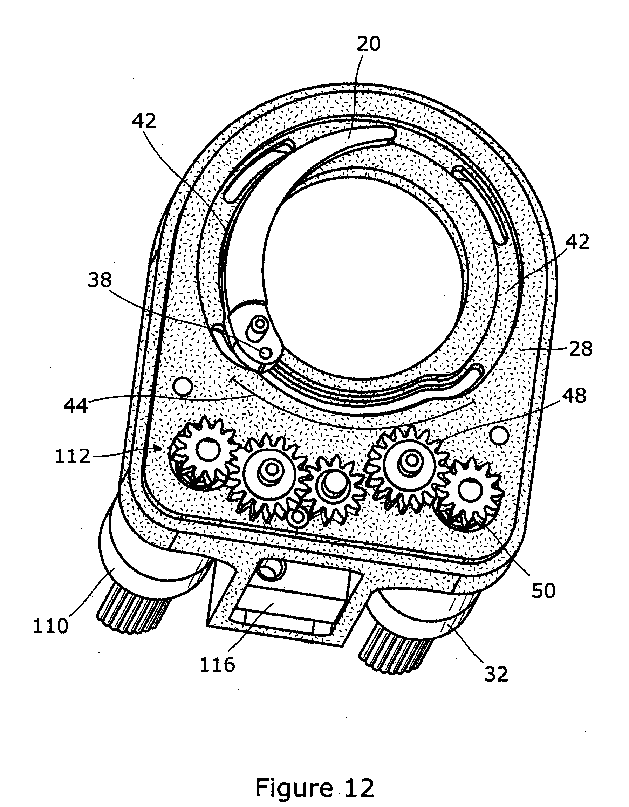

This is illustrated in figure 8 which shows a camera assembly 60 coupled to the apparatus 10 in such a manner that the camera assembly 60 including the optical element 12 can be retracted axially within the apparatus 10 in order to bring the exposed surface 11 into suitable positions for optical deployment and for cleaning by the wiper arm. The axial drive 58 is shown in figure 8 in a highly schematic form, and in practice may be implemented in a number of ways, for example being driven by a cam arrangement coupled to the motor 32 already being used for rotation of the collar 30 relative to the chassis 28, or using an axial drive motor as discussed below in connection with figures 12 to 16.

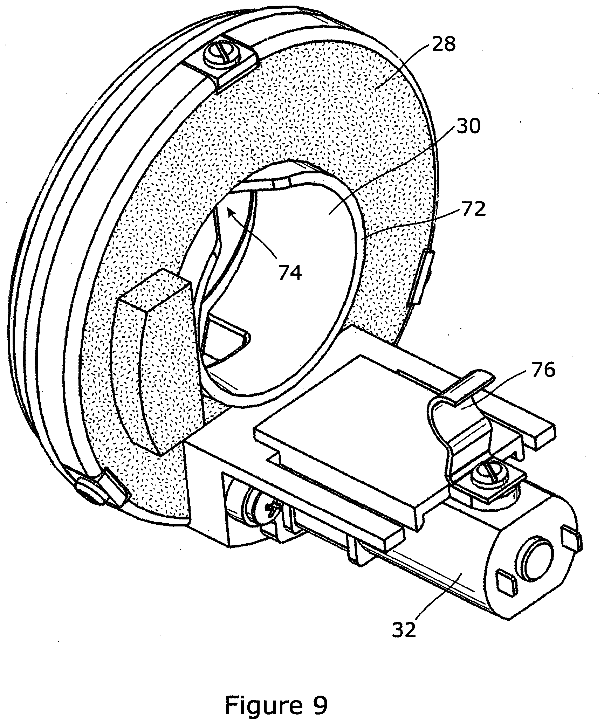

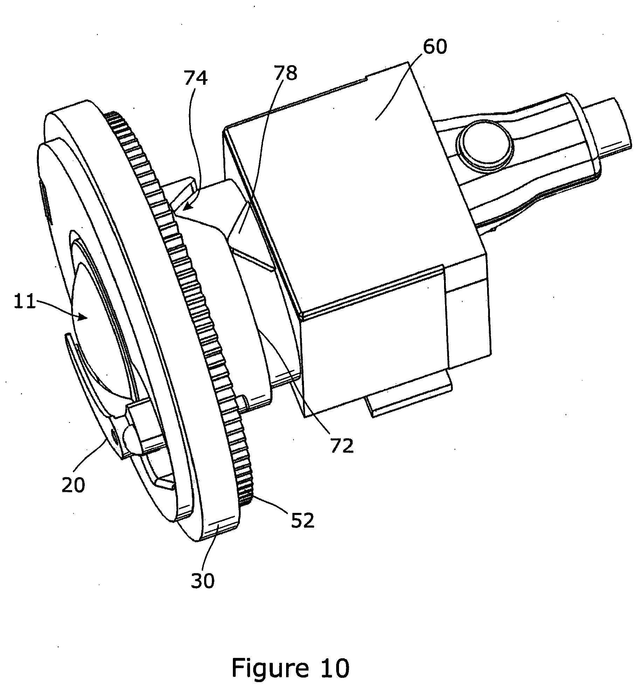

Figure 9 shows an example implementation of axial drive 58 in which an inner rim 72 of the collar 30 acts as a circular cam, as it rotates driven by the motor 32 relative to the chassis 28. In particular, a notch 74 in the rim 72 is arranged to allow the camera (not shown in this figure) to move forward to an operational position in which the front surface of the camera lens protrudes as shown in figure 10, when the cleaning action of the apparatus 10 is not in operation. This is at the same time as the wiper arm 20 is fully in the stowed position and the cam follower 38 of the wiper arm occupies the rest position 45 of the wiper arm cam track shown in figure 4. As also shown in figure 9, a camera spring 76 urges the camera, mounted to slide or be otherwise moveable axially, towards the rim 72. As the collar rotates to move the wiper arm from the stowed to the active position, rotation of the rim urges the camera, through a camera cam follower mounted to the camera, away from the collar 30 and towards the camera spring. As the cleaning action comes to an end, the camera spring 76 again moves the camera 60 back towards the collar as the camera cam follower moves back into the notch 74.

This action can be better understood from the perspective view of figure 10 which for clarity omits the chassis 28, motor 32 and bezel 26, but shows the camera cam follower 78 following the camming action of the rim 72 and notch 74 as the collar 20 rotates to also effect the cleaning movement of the wiper arm 20.

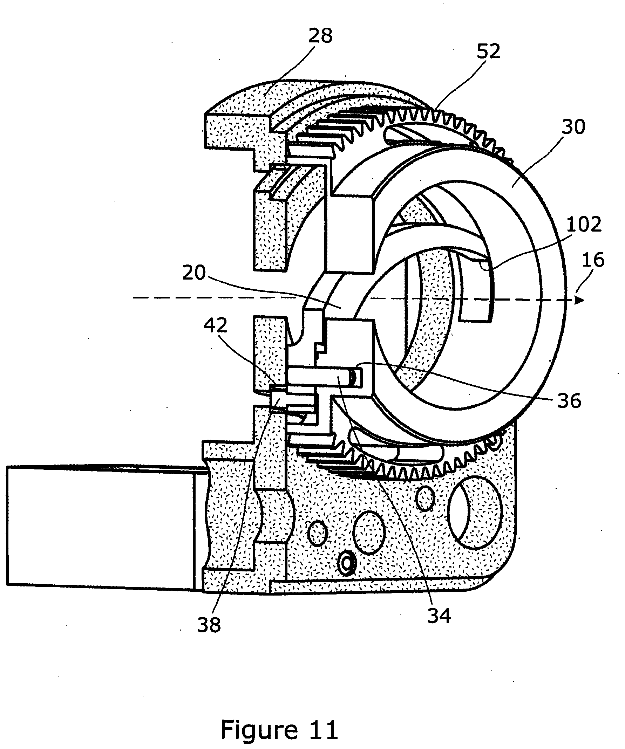

Referring to figure 11 there is illustrated in perspective, cut away and partial view a second embodiment of the invention. In particular, this figure illustrates how the arrangements discussed with reference to figures 1 to 10 can be modified in certain ways, and to this end some of the components which have corresponding functions are labelled with the same reference numerals.

The arrangement of figure 11 shows the wiper arm 20 mounted between the chassis 28 and the collar 30, instead of in front of the collar as shown in earlier figures. However, as shown in the earlier figures, the wiper arm 20 is rotationally mounted on the collar by a pin 34, and is driven to rotate by a cam follower 38 which follows a track 42 provided by the chassis 28. The collar 30 is driven to rotate about an optical axis 16 of the optical element (not shown in this figure) by means of a toothed rack 52 provided around the circumference of the collar 30 and a geared driving mechanism shown in figure 12.

In figure 11 the wiper arm 20 is shown in a partially deployed position, midway between a stowed position in between the collar and the chassis, and a deployed position in which the wiper arm is disposed approximately diametrically across the exposed surface of the optical element (not shown in this figure). Compared with the arrangement of figures 1 to 10, the wiper arm 20 of figure 11 is rather longer, so that when in the deployed position it reaches substantially or fully across the width or diameter of the optical element. A tip 102 of the wiper arm may be retained within a groove, for example a groove of the collar, or behind the collar, when in the deployed position (and optionally also when in the stowed position and all positions in between deployed and stowed) to thereby resist pressure applied to the wiper arm by the optical element when wiping the exposed surface, and provide an improved and firmer contact between the wiper arm and the exposed optical surface and/or enable a less rigid wiper arm 20 to be used.

Figure 12 shows how the wiper arm 20 may be disposed relative to the chassis 28 in the arrangement of figure 11, and how the cam follower 38 is then disposed relative to the cam track 42. Note that the cam track 42 deviates in from a circular form in a radial direction relative to the optical axis over a first portion 44 of the cam track, in order to drive the wiper arm from a stowed position to a deployed position, and then back again when the wiping action is complete. Note also, however, that in this arrangement the cam track does not deviate in an axial direction, so that the wiper arm is not driven in an axial direction but instead remains in a single plane for the whole of its movement. The slots in the chassis adjacent to the cam track are for the purposes of allowing water and dirt to egress, and do not have any role in driving the cam follower.

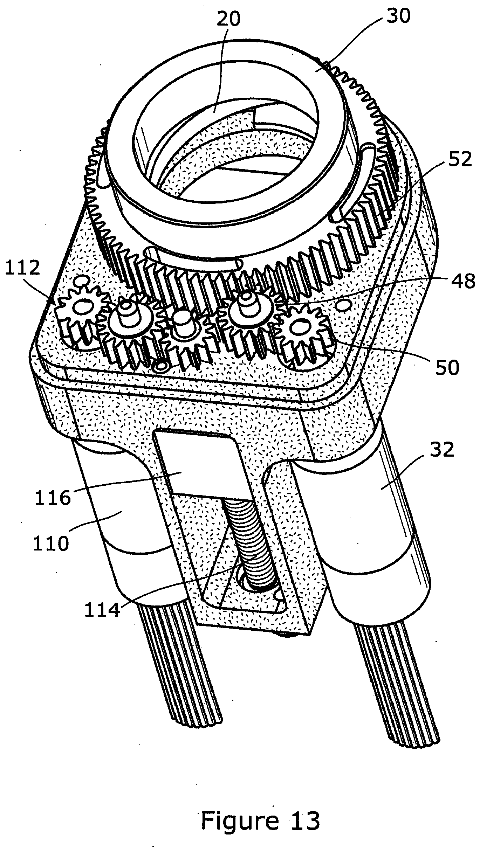

Figure 12 also shows the pinion 48 which drives the rotation of the collar 30, and which is itself driven by wiper motor 32 through drive train 50. This is also illustrated in figure 13 in which the collar is also shown.

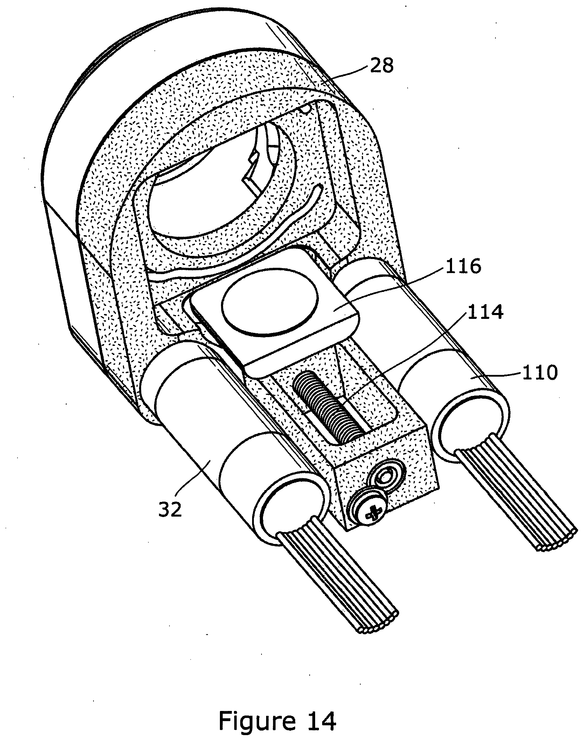

As already discussed in connection with figures 8-10, the optical element may be retracted by an axial drive 58 which can take various forms. In figures 12, 13 and 14 the axial drive is provided by an axial drive motor 110. Figures 12 and 13 show a retraction motor drive train 112 which couples rotational motion of the axial drive motor 110 to a lead screw 114 (omitted in figure 12). As more clearly seen in figure 14, carriage 116 is driven axially by rotation of the lead screw 114. The optical element is carried, directly or indirectly, on the carriage so that it can be driven axially in a forward and backward direction by action of the axial drive motor 110. Typically, a camera assembly 60 (not shown in figures 12-14) may be mounted on the carriage 116, and the optical element will be a part of that camera assembly. Of course, the axial drive 58 may be implemented in a variety of other ways using an axial drive motor 110.

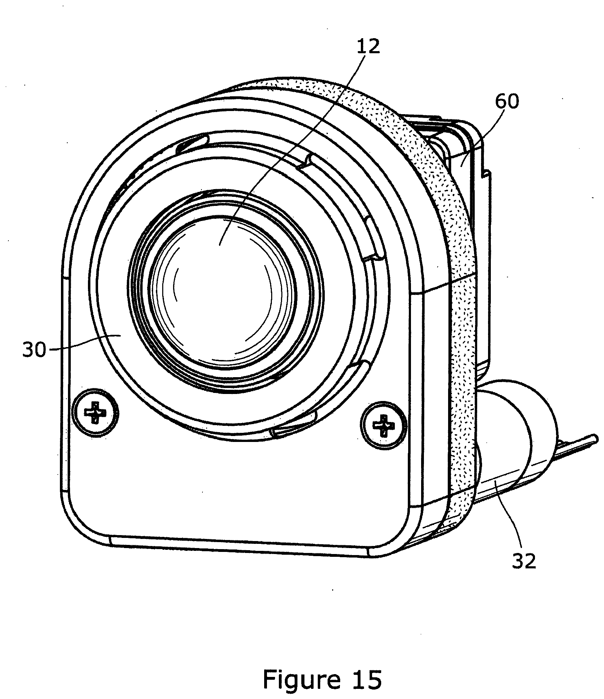

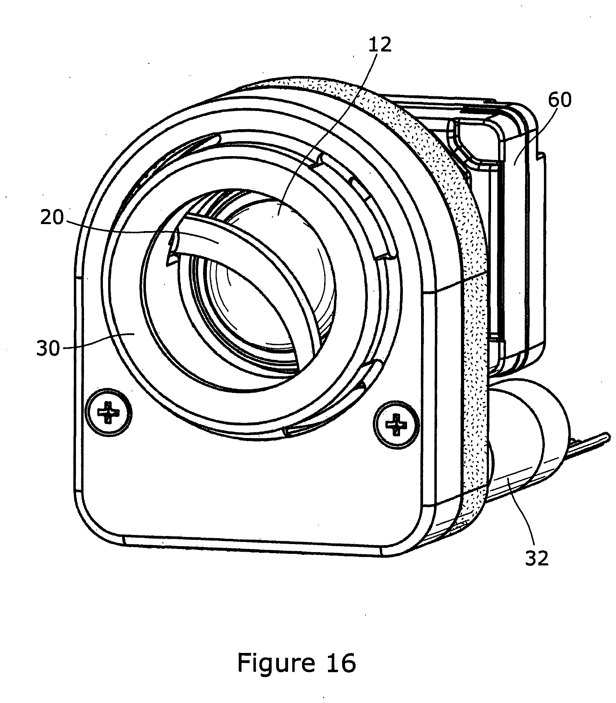

Figures 15 and 16 are front perspective views of the mechanism of figures 11 to 14 implemented to axially move a camera assembly 60 and to clean an exposed optical surface 12 of that camera assembly 60 using the wiper arm 20. In figure 15 the optical surface is in an axially extended position, for example where at least a part of the optical surface 12 extends beyond the collar 30, including any bezel or similar covering provided on the collar. If the optical surface 12 is the surface of a wide angle lens, in this position an improved viewing angle may be provide for the lens because of reduced or avoided interference in the view of the lens by the collar 30 and any bezel or similar.

In operation, the axial drive 58 is used to retract the optical surface 12, for example by retracting the camera assembly 60 using the mechanism discussed in connection with figures 12-14, or some other mechanism, to a retracted position as shown in figure 16. Once retracted, the wiper motor 32 may be used to drive the mechanism discussed in connection with figures 11-13, or some other mechanism in order to deploy the wiper blade, carry out a rotational cleaning action, and then to stow the wiper blade. Figure 16 shows the wiper blade 20 in a deployed position during the rotational cleaning action.

An axial drive 58 using a motor, for example an electrical motor to drive the axial movement of the exposed optical surface may be advantageous in a variety of ways. For example, it will be noted that the rotational cleaning mechanism of figures 11 - 13 lacks the axial deployment movement of the wiper blade evident in the mechanism of figures 1 - 6, and in figures 11-13 this is replaced by a suitable range of movement and control of the axial drive 58, thereby simplifying the cam track based mechanism, and allowing more of the cam track and range of rotational movement to be used in the cleaning operation.

An axial drive 58 using a motor may also be used to provide further cleaning action movement, for example by providing small axial movements of the optical surface 12 when the wiper blade is in a deployed position, and optionally while the wiper blade also is rotating. For example, a small oscillatory axial movement could be used for this purpose. Such an axial movement during the cleaning action could be used to provide a more thorough or intense cleaning action, and could be employed as part of every or most cleaning actions, or less frequently for example when the normal cleaning action has not provided a satisfactory result (this could be detected automatically using the camera assembly and suitable data processing).

More generally, axially movement can be controlled in different ways for various purposes, including at different axial speeds, in either direction, to different positions of extension and retraction, and at chosen frequencies and times. The optical element can therefore be retracted and extended for different purposes, for example being retracted to keep cleaner, for reasons of security, and/or protection from damage in other ways, when not in use or when necessary or desirable for such purposes.

The increased amount of axial movement afforded by a motorised axial drive 58 may also be used to enable additional extension in an axial direction. This could be used so that the mechanisms required for cleaning the exposed optical surface can be concealed behind a panel through which the optical surface is extended. An increased amount of axial movement could also be used to provide an even wider viewing angle, for example for a wide angle lens, by providing further extension out of a body panel or similar.

Increasing the amount of axial movement afforded by a motorised axial drive 58 may also allow the mechanisms required to implement the wiper blade to be more compact diametrically, thereby allowing it to fit within more confined spaces. This could be useful in situations where space is very limited for example when the optical element is to be fitted within an automobile overtaking mirror or similar.

Although particular detailed embodiments of the invention have been described, it will be apparent that a variety of variations and modifications may be carried out without departing from the scope of the invention.

## Claims

1. Apparatus (10) for cleaning an exposed surface (11) of an optical element (12), the apparatus comprising:
a collar (30) arranged to be disposed circumferentially around, and to rotate around, an axis (16) of an optical element which the apparatus is arranged to clean; and
a wiper arm (20) coupled to the collar so as to rotationally clean the exposed surface of the optical element as the collar rotates;
**characterised in that** the apparatus further comprises:
an axial drive (58) arranged to retract the exposed surface from the position in which it is deployed for use, to a retracted position for the rotational cleaning, and to axially extend the optical element forwards again after cleaning.

2. The apparatus of claim 1 wherein the wiper arm (20) is arranged to move, relative to the collar (30), between a stowed position, and an active position in which the exposed surface of the optical element may be cleaned by the wiper arm.

3. The apparatus of claim 2 wherein the wiper arm (20) is rotationally coupled to the collar for movement between the stowed and active positions across the exposed surface.

4. The apparatus of claim 3 wherein the wiper arm is also coupled to the collar so as to move axially relative to the optical element between the stowed and active positions.

5. The apparatus of any of claims 2 to 4 arranged such that rotation of the collar around the optical axis drives the wiper arm between the stowed and active positions.

6. The apparatus of any of claims 2 to 5 further comprising a cam track (42), wherein the wiper arm is coupled to a cam follower arranged to follow the cam track as the collar rotates so as to move the wiper arm between the stowed and active positions.

7. The apparatus of any of preceding claim further comprising an annular cover disposed in front of the collar.

8. The apparatus of claim 6 further comprising an annular cover disposed in front of the collar, wherein the annular cover is sprung so as to bias the cam follower towards the cam track.

9. The apparatus of any preceding claim further comprising a motor (32) arranged to rotate the collar around the axis of the optical element (12).

10. The apparatus of any preceding claim wherein the wiper arm comprises a wiper blade arranged to contact the exposed surface (11), wherein the wiper blade is formed from a flexible material.

11. The apparatus of any preceding claim wherein the optical element (12) is a camera lens.

12. The apparatus of any preceding claim wherein the exposed surface is one or more of: a transparent convex surface; a convex surface with a rotationally symmetric curvature; a convex exposed optical surface of a wide angle lens; and deployed for use of the optical element at least partly in front of the collar.

13. The apparatus of any preceding claim wherein the axial drive (58) is arranged to retract the exposed surface for protection of the exposed surface of the optical element.

14. The apparatus of any of claims 1 to 12 wherein the axial drive comprises a circular cam arranged to co-rotate with the collar, the circular cam being provided with a recess arranged to urge axial retraction of the optical element before cleaning, and to allow forwards axial extension of the optical element after cleaning.

15. The apparatus of any preceding claim wherein the axial drive comprises an axial drive motor (110) arranged to retract and extend the exposed surface.

16. The apparatus of claim 15 arranged to use the axial drive to move the exposed surface axially during the rotational cleaning of the exposed surface to thereby improve the cleaning effect.

17. The apparatus of any preceding claim further comprising said optical element (12).

18. A vehicle comprising a camera having a wide angle lens, and the apparatus of any of claims 1 to 17 arranged to automatically clean an exposed optical surface of the wide angle lens.

19. A method of cleaning an exposed convex surface (11) of an optical element (12), the method comprising:
using an axial drive (58) to retract the exposed surface from a position in which it is deployed for use to a retracted position for cleaning;
disposing a wiper arm (20) radially on the retracted and exposed surface;
rotating a circumferential end of the wiper arm (20) around the outside of the exposed surface; and
using the axial drive (58) to axially extend the optical element forwards again after cleaning.

## Patentansprüche

1. Vorrichtung (10) zum Reinigen einer freiliegenden Fläche (11) eines optischen Elements (12), wobei die Vorrichtung Folgendes aufweist:
einen Kragen (30), der so ausgestaltet ist, dass er umlaufend um, und sich drehend um, eine Achse (16) eines optischen Elements angeordnet ist, zur Reinigung welchen optischen Elements die Vorrichtung ausgestaltet ist; und
einen Wischerarm (20), der an den Kragen gekoppelt ist, so dass er drehend die freiliegende Fläche des optischen Elements reinigt, wenn sich der Kragen dreht;
**dadurch gekennzeichnet, dass** die Vorrichtung ferner Folgendes aufweist:
einen Achsantrieb (58), der zum Einziehen der freiliegenden Fläche von der Position, in welcher sie bei Verwendung eingesetzt wird, in eine eingezogene Position für die drehbare Reinigung und zum erneuten axialen Ausfahren des optischen Elements nach vorne nach der Reinigung ausgestaltet ist.

2. Vorrichtung nach Anspruch 1, wobei der Wischerarm (20) zur Bewegung, relativ zum Kragen (30), zwischen einer verstauten Position und einer aktiven Position ausgestaltet ist, in welcher die freiliegende Fläche des optischen Elements von dem Wischerarm gereinigt werden kann.

3. Vorrichtung nach Anspruch 2, wobei der Wischerarm (20) drehbar an den Kragen für eine Bewegung zwischen der verstauten und der aktiven Position über die freiliegende Fläche gekoppelt ist.

4. Vorrichtung nach Anspruch 3, wobei der Wischerarm auch an den Kragen gekoppelt ist, um sich axial relativ zum optischen Element zwischen der verstauten und der aktiven Position zu bewegen.

5. Vorrichtung nach einem der Ansprüche 2 bis 4, die so ausgestaltet ist, dass die Drehung des Kragens um die optische Achse den Wischerarm zwischen der verstauten und der aktiven Position steuert.

6. Vorrichtung nach einem der Ansprüche 2 bis 5, die ferner eine Nockenspur (42) aufweist, wobei der Wischerarm an einen Nockenstößel gekoppelt ist, der zum Folgen der Nockenspur ausgestaltet ist, wenn sich der Kragen dreht, so dass der Wischerarm zwischen der verstauten und der aktiven Position bewegt wird.

7. Vorrichtung nach einem der vorhergehenden Ansprüche, die ferner eine ringförmige Abdeckung aufweist, die vor dem Kragen angeordnet ist.

8. Vorrichtung nach Anspruch 6, die ferner eine ringförmige Abdeckung aufweist, die vor dem Kragen angeordnet ist, wobei die ringförmige Abdeckung gefedert ist, um den Nockenstößel in Richtung der Nockenspur vorzuspannen.

9. Vorrichtung nach einem der vorhergehenden Ansprüche, die ferner einen Motor (32) aufweist, der zum Drehen des Kragens um die Achse des optischen Elements (12) ausgestaltet ist.

10. Vorrichtung nach einem der vorhergehenden Ansprüche, wobei der Wischerarm ein Wischerblatt aufweist, das zum Berühren der freiliegenden Fläche (11) ausgestaltet ist, wobei das Wischerblatt aus einem flexiblen Material gebildet ist.

11. Vorrichtung nach einem der vorhergehenden Ansprüche, wobei das optische Element (12) eine Kameralinse ist.

12. Vorrichtung nach einem der vorhergehenden Ansprüche, wobei die freiliegende Fläche eine oder mehrere der folgenden ist: eine transparente konvexe Fläche; eine konvexe Fläche mit einer rotationssymmetrischen Biegung; eine konvexe freiliegende optische Fläche eines Weitwinkelobjektivs; und die zur Verwendung des optischen Elements wenigstens teilweise vor dem Kragen eingesetzt wird.

13. Vorrichtung nach einem der vorhergehenden Ansprüche, wobei der Achsantrieb (58) dazu ausgestaltet ist, die freiliegende Fläche zum Schutz der freiliegenden Fläche des optischen Elements einzuziehen.

14. Vorrichtung nach einem der Ansprüche 1 bis 12, wobei der Achsantrieb eine kreisförmige Nocke aufweist, die dazu ausgestaltet ist, sich mit dem Kragen zu drehen, wobei die kreisförmige Nocke mit einer Aussparung versehen ist, die dazu ausgestaltet ist, ein axiales Einziehen des optischen Elements vor dem Reinigen voranzutreiben und ein axiales Ausfahren des optischen Elements nach vorne nach dem Reinigen zu ermöglichen.

15. Vorrichtung nach einem der vorhergehenden Ansprüche, wobei der Achsantrieb einen Achsantriebsmotor (110) aufweist, der zum Einziehen und Ausfahren der freiliegenden Fläche ausgestaltet ist.

16. Vorrichtung nach Anspruch 15, die zur Verwendung des Achsantriebs zum axialen Bewegen der freiliegenden Fläche während des drehenden Reinigens der freiliegenden Fläche ausgestaltet ist, um somit die Reinigungswirkung zu verbessern.

17. Vorrichtung nach einem der vorhergehenden Ansprüche, die ferner das optische Element (12) aufweist.

18. Fahrzeug mit einer Kamera, die ein Weitwinkelobjektiv aufweist, und mit der Vorrichtung nach einem der Ansprüche 1 bis 17, die dazu ausgestaltet ist, eine freiliegende optische Fläche des Weitwinkelobjektivs automatisch zu reinigen.

19. Verfahren zum Reinigen einer freiliegenden konvexen Fläche (11) eines optischen Elements (12), wobei das Verfahren Folgendes aufweist:
Verwenden eines Achsantriebs (58) zum Einziehen der freiliegenden Fläche von einer Position, in welcher sie bei Verwendung eingesetzt wird, in eine eingezogene Position zum Reinigen;
Anordnen eines Wischerarms (20) radial auf der eingezogenen und freiliegenden Fläche;
Drehen eines umlaufenden Endes des Wischerarms (20) um die Außenseite der freiliegenden Fläche; und
Verwenden des Achsantriebs (58) zum erneuten axialen Ausfahren des optischen Elements nach vorne nach der Reinigung.

## Revendications

1. Dispositif (10) pour nettoyer une surface exposée (11) d'un élément optique (12), le dispositif comprenant :
un collier (30) agencé pour être disposé circonférentiellement et pour tourner autour d'un axe (16) d'un élément optique devant être nettoyé par le dispositif ; et
un bras de racleur (20) couplé au collier de manière à nettoyer en rotation la surface exposée de l'élément optique lorsque le collier tourne ;
**caractérisé en ce que** le dispositif comprend en outre :
un entraînement axial (58) agencé pour rétracter la surface exposée depuis la position dans laquelle elle est déployée en utilisation vers une position rétractée pour le nettoyage en rotation, et pour étendre axialement l'élément optique vers l'avant à nouveau après un nettoyage.

2. Dispositif selon la revendication 1, dans lequel le bras de racleur (20) est prévu pour se déplacer, par rapport au collier (30), entre une position rangée et une position active dans laquelle la surface exposée de l'élément optique peut être nettoyée par le bras de racleur.

3. Dispositif selon la revendication 2, dans lequel le bras de racleur (20) est couplé de manière rotative au collier pour un déplacement entre les positions rangée et active à travers la surface exposée.

4. Dispositif selon la revendication 3, dans lequel le bras de racleur est également couplé au collier de manière à se déplacer axialement par rapport à l'élément optique entre les positions active et rangée.

5. Dispositif selon l'une quelconque des revendications 2 à 4, agencé de telle sorte qu'une rotation du collier autour de l'axe optique entraîne le bras de racleur entre les positions rangée et active.

6. Dispositif selon l'une quelconque des revendications 2 à 5, comprenant en outre un chemin de came (42), dans lequel le bras de racleur est couplé à un suiveur de came prévu pour suivre le chemin de came lorsque le collier tourne afin de déplacer le bras de racleur entre les positions rangée et active.

7. Dispositif selon l'une quelconque des revendications précédentes, comprenant en outre un recouvrement annulaire disposé en avant du collier.

8. Dispositif selon la revendication 6, comprenant en outre un recouvrement annulaire disposé en avant du collier, dans lequel le recouvrement annulaire est rendu élastique de manière à solliciter le suiveur de came vers la piste de came.

9. Dispositif selon l'une quelconque des revendications précédentes, comprenant en outre un moteur (32) agencé pour faire tourner le collier autour de l'axe de l'élément optique (12).

10. Dispositif selon l'une quelconque des revendications précédentes, dans lequel le bras de racleur comprend une lame de racleur agencée pour venir en contact avec la surface exposée (11), dans lequel la lame de racleur est formée d'un matériau souple.

11. Dispositif selon l'une quelconque des revendications précédentes, dans lequel l'élément optique (12) est un objectif de caméra.

12. Dispositif selon l'une quelconque des revendications précédentes, dans lequel la surface exposée est une ou plusieurs parmi : une surface convexe transparente ; une surface convexe ayant une courbure symétrique en rotation ; une surface optique exposée convexe d'un objectif grand-angle ; et déployée pour une utilisation du système optique au moins partiellement en avant du collier.

13. Dispositif selon l'une quelconque des revendications précédentes, dans lequel l'entraînement axial (58) est agencé pour rétracter la surface exposée en vue d'une protection de la surface exposée de l'élément optique.

14. Dispositif selon l'une quelconque des revendications 1 à 12, dans lequel l'entraînement axial comprend une came circulaire agencée pour tourner conjointement avec le collier, la came circulaire étant munie d'un évidement agencé pour pousser une rétraction axiale de l'élément optique avant un nettoyage, et pour permettre une extension axiale vers l'avant de l'élément optique après un nettoyage.

15. Dispositif selon l'une quelconque des revendications précédentes, dans lequel l'entraînement axial comprend un moteur d'entraînement axial (110) agencé pour rétracter et étendre la surface exposée.

16. Dispositif selon la revendication 15, agencé pour utiliser l'entraînement axial pour déplacer la surface exposée axialement pendant le nettoyage en rotation de la surface exposée, afin d'améliorer l'effet de nettoyage.

17. Dispositif selon l'une quelconque des revendications précédentes, comprenant en outre ledit élément optique (12).

18. Véhicule comprenant une caméra ayant un objectif grand-angle, et le dispositif selon l'une quelconque des revendications 1 à 17 agencé pour nettoyer automatiquement une surface optique exposée de l'objectif grand-angle.

19. Procédé de nettoyage d'une surface convexe exposée (11) d'un élément optique (12), le procédé comprenant les étapes consistant à :
utiliser un entraînement axial (58) pour rétracter la surface exposée depuis une position dans laquelle elle est déployée pour utilisation vers une position rétractée pour nettoyage ;
disposé un bras de racleur (20) également sur la surface rétractée et exposée ;
faire tourner un bord circonférentiel du bras de racleur (20) autour de l'extérieur de la surface exposée ; et
utiliser l'entraînement axial (58) pour étendre axialement l'élément optique vers l'avant à nouveau après un nettoyage.
